# EUROPEAN PATENT SPECIFICATION

(11) **EP 4 268 783 B1**
(45) Date of publication and mention of the grant of the patent: **09.07.2025**
(21) Application number: 22870151.2
(22) Date of filing: 11.08.2022
(51) Int. Cl.: A61H 1/02, B25J 9/00, B25J 9/12, B25J 9/10, H02K 7/116, H02K 5/04, H02K 7/08, F16H 1/36, A61H 3/00

(54) **DRIVING ASSEMBLY AND MOTION ASSISTANCE DEVICE COMPRISING SAME**
ANTRIEBSANORDNUNG UND BEWEGUNGSUNTERSTÜTZUNGSVORRICHTUNG DAMIT
ENSEMBLE D'ENTRAÎNEMENT ET DISPOSITIF D'ASSISTANCE AU MOUVEMENT LE COMPRENANT

(30) Priority: 17.09.2021 KR 20210125237; 28.01.2022 KR 20220013455
(43) Date of publication of application: 01.11.2023
(60) Divisional application: 25180108.0
(73) Proprietor: Samsung Electronics Co., Ltd., Suwon-si, Gyeonggi-do 16677 (KR)
(72) Inventor: ROH, Segon, Suwon-si, Gyeonggi-do 16677 (KR); KANG, Wanku, Suwon-si, Gyeonggi-do 16677 (KR); LEE, Sangho, Suwon-si, Gyeonggi-do 16677 (KR); LEE, Ho, Suwon-si, Gyeonggi-do 16677 (KR); HAN, Seungil, Suwon-si, Gyeonggi-do 16677 (KR)
(74) Representative: Gulde & Partner
(86) International application number: PCT/KR2022/012016
(87) International publication number: WO 2023/043065

(56) References cited:
- EP-A1- 1 547 568
- JP-A- 2004 089 373
- KR-A- 20100 074 730
- KR-A- 20190 011 084
- KR-A- 20190 125 692
- KR-B1- 101 467 732
- KR-B1- 101 488 192
- US-A1- 2019 021 932

## Description

### Technical Field

The present disclosure relates to a driving assembly and a motion assistance device.

### Background Art

A motion assistance device refers to a mechanism or device which helps a patient, who cannot walk on his own due to various diseases, accidents, and the like, to exercise for rehabilitation treatment. As aging accelerates in our society, a growing number of people experience difficulty exercising normally or an inconvenience during exercise, so interest in motion assistance devices is also increasing. A motion assistance device is worn on the body of a user to assist muscular strength necessary for the user to exercise and promotes the user to walk so that the user may exercise normally. Document US2019021932A1 discloses such a conventional motion assistance device comprising a proximal support configured to be worn on a proximal part of a user; a distal support configured to be worn a distal part of the user; a driving assembly which is connected to the proximal support and configured to generate power; and a driving frame configured to transmit a force from the driving assembly to the distal support, wherein the driving assembly comprises a speed reduce, an actuator comprising a stator and a rotor, wherein the stator is fixed to the housing and has a ring shape, wherein the rotor is located inside the stator and rotatable relative to the stator.

In general, users who wear the motion assistance device are people with physical disabilities. For these people, the process of wearing the motion assistance device itself may be difficult. There is a need for technology which enables a user with physical disabilities to put on a motion assistance device alone, without the help of other people.

EP1547568A1 discloses a conventional speed reducer for walk assist apparatus and KR101488192B1 discloses a wearable robot using an actuator module.

The above description is information the inventor(s) acquired during the course of conceiving the present disclosure, or already possessed at the time, and is not necessarily art publicly known before the present application was filed.

### Disclosure of the Invention

### Technical Solutions

The present invention is provided by the appended set of claims. According to various example embodiments, there is provided a motion assistance device including a proximal support configured to be worn on a proximal part of a user, a distal support configured to be worn on a distal part of the user, a driving assembly which is connected to the proximal support and configured to generate power, and a driving frame configured to transmit the force from the driving assembly to the distal support.

According to various example embodiments, the driving assembly may include a housing which is connected to the proximal support, an actuator including a stator which is fixed to the housing and has a ring shape and a rotor which is located inside the stator and rotatable relative to the stator, a speed reducer which is inserted inside the rotor and includes an input end which is connected to an output end of the actuator, and a supporting part configured to support the speed reducer and connected detachably to the housing.

According to various example embodiments, the driving frame may be configured to connect the output end of the speed reducer to the distal part and is capable of motion relative to the supporting part.

According to various example embodiments, the supporting part may include a base frame which overlaps with the housing based on a direction of a rotation axis of the rotor and connected detachably to the housing and a supporting frame which extends from the base frame, is at least partially located inside the stator, and is configured to support the speed reducer.

According to various example embodiments, the supporting part may further include an extension frame which extends from the base frame and overlaps with the speed reducer based on a direction of a rotation axis of the rotor.

According to various example embodiments, the driving assembly may further include a frame fastening member configured to fasten the supporting part to the housing.

According to various example embodiments, the housing may include a lower cover configured to support the rotor in a way that the rotor is rotatable, a side cover which extends from the lower cover and is configured to cover a side surface of the stator, and an upper cover which extends from the side cover and is configured to cover an upper surface of the stator.

According to various example embodiments, the rotor may include a main plate which is provided in parallel with the lower cover and a vertical extension part which extends from the main plate and is between the stator and the speed reducer.

According to various example embodiments, the rotor may further include a cap configured to cover the main plate and a cap fastening member configured to fasten the cap to the speed reducer and connected to the speed reducer.

According to various example embodiments, the supporting part and the speed reducer may be separable from the housing.

According to various example embodiments, the speed reducer may include a main shaft which is connected to the rotor and rotates based on a rotation axis of the rotor, a first sun gear which is fixed on the main shaft, a ring gear which is fixed on the supporting part and surrounds the first sun gear, a plurality of first planetary gears which is arranged between the first sun gear and the ring gear and engages with the first sun gear and the ring gear, a first carrier which is connected to a central axis of each of the plurality of first planetary gears, a second sun gear which is connected to the first carrier, a plurality of second planetary gears which is arranged between the second sun gear and the ring gear and engages with the second sun gear and the ring gear, and a second carrier which is connected to a central axis of each of the plurality of second planetary gears and connected to the driving frame.

According to various example embodiments, the rotor and the first sun gear may rotate at a same speed, and the first sun gear, the first carrier, and the second carrier may rotate at different speeds.

According to various example embodiments, the driving assembly may further include a lower bearing which is arranged between the rotor and the housing and an upper bearing which is arranged between the ring gear and the second carrier.

According to various example embodiments, the driving assembly may further include a first inner bearing which is arranged between the main shaft and the first carrier, a second inner bearing which is arranged between the main shaft and the second sun gear, and a third inner bearing which is arranged between the main shaft and the second carrier.

The driving assembly may further include a washer which is inserted in the main shaft and configured to cover the third inner bearing.

The driving assembly may further include a stopper which is arranged in the supporting part and located on a movement path of the driving frame.

According to various example embodiments, a driving assembly includes a housing, an actuator including a stator which is fixed to the housing and has a ring shape and a rotor which is located inside the stator and rotatable relative to the stator, a speed reducer which is inserted inside the rotor and includes an input end which is connected to an output end of the actuator, and a supporting part configured to support the speed reducer and connected detachably to the housing.

According to various example embodiments, the supporting part may include a base frame which overlaps with the housing based on a direction of a rotation axis of the rotor and connected detachably to the housing and a supporting frame which extends from the base frame, is at least partially located inside the stator, and is configured to support the speed reducer.

According to various example embodiments, the driving assembly may further include a frame fastening member configured to fasten the supporting part to the housing.

According to various example embodiments, the speed reducer may include a main shaft which is connected to the rotor and rotates based on a rotation axis of the rotor, a first sun gear which is fixed on the main shaft, a ring gear which is fixed on the supporting part and surrounds the first sun gear, a plurality of first planetary gears which is arranged between the first sun gear and the ring gear and engages with the first sun gear and the ring gear, a first carrier which is connected to a central axis of each of the plurality of first planetary gears, a second sun gear which is connected to the first carrier, a plurality of second planetary gears which is arranged between the second sun gear and the ring gear and engages with the second sun gear and the ring gear, and a second carrier which is connected to a central axis of each of the plurality of second planetary gears and connected to the driving frame.

According to various example embodiments, the driving assembly may be provided in the motion assistance device and may include a housing, an actuator including a stator which is fixed to the housing and has a ring shape and a rotor which is located inside the stator and rotatable relative to the stator, a speed reducer including a ring gear which is inserted in the rotor and faces an inner side surface of the rotor, a sun gear which is connected to an output end of the actuator, and a plurality of planetary gears which is arranged between the ring gear and the sun gear, and a supporting part configured to support the ring gear and connected detachably to the housing.

### Brief Description of Drawings

FIG. 1 is a diagram illustrating a user wearing a motion assistance device according to an example embodiment.
FIG. 2 is a perspective view of a driving assembly according to an example embodiment.
FIG. 3 is an exploded perspective view of a front of a driving assembly according to an example embodiment.
FIG. 4 is an exploded perspective view of a rear of a driving assembly according to an example embodiment.
FIG. 5 is a cross-sectional view of a motion assistance device illustrating a cross-sectional view taken along a line V-V of FIG. 2.
FIG. 6 is a perspective view of a driving assembly according to a claimed embodiment.
FIG. 7 is an exploded perspective view of a driving assembly of FIG. 6 from which a stopper separated.
FIG. 8 is an exploded perspective view of a driving assembly of FIG. 7 from which a speed reducer is separated.
FIG. 9 is a cross-sectional view of a driving assembly according to a claimed embodiment.
FIG. 10 is a cross-sectional view of a driving assembly according to a claimed embodiment.
FIG. 11 is an exploded cross-sectional view of a driving assembly according to a claimed embodiment.
FIG. 12 is an exploded perspective view schematically illustrating when two different speed reducers are waiting to be connected to a housing according to an example embodiment.
FIG. 13 is a perspective view schematically illustrating when a first speed reducer is connected to a housing according to an example embodiment.
FIG. 14 is a perspective view schematically illustrating when a second speed reducer is connected to a housing according to an example embodiment.
FIG. 15 is a diagram schematically illustrating a user wearing a wearable module of a motion assistance device on the upper arm according to an example embodiment.

### Best Mode for Carrying Out the Invention

The following detailed structural or functional description is provided as an example only and various alterations and modifications may be made to the example embodiments. Here, example embodiments are not construed as limited to the disclosure and should be understood to include all changes, equivalents, and replacements within the idea and the technical scope of the invention as defined by the appended claims

Terms, such as first, second, and the like, may be used herein to describe various components. Each of these terminologies is not used to define an essence, order or sequence of a corresponding component but used merely to distinguish the corresponding component from other component(s). For example, a "first" component may be referred to as a "second" component, and similarly, the "second" component may be referred to as the "first" component.

It should be noted that if it is described that one component is "connected", "coupled", or "joined" to another component, a third component may be "connected", "coupled", and "joined" between the first and second components, although the first component may be directly connected, coupled, or joined to the second component.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

The same name may be used to describe an element included in the example embodiments described above and an element having a common function. Unless otherwise mentioned, the descriptions on the example embodiments may be applicable to the following example embodiments and thus, duplicated descriptions will be omitted for conciseness.

Unless otherwise defined, all terms, including technical and scientific terms, used herein have the same meaning as commonly understood by one of ordinary skill in the art to which this disclosure pertains. Terms, such as those defined in commonly used dictionaries, are to be interpreted as having a meaning that is consistent with their meaning in the context of the relevant art, and are not to be interpreted in an idealized or overly formal sense unless expressly so defined herein.

Hereinafter, example embodiments will be described in detail with reference to the accompanying drawings. When describing the embodiments with reference to the accompanying drawings, like reference numerals refer to like constituent elements and a repeated description related thereto will be omitted.

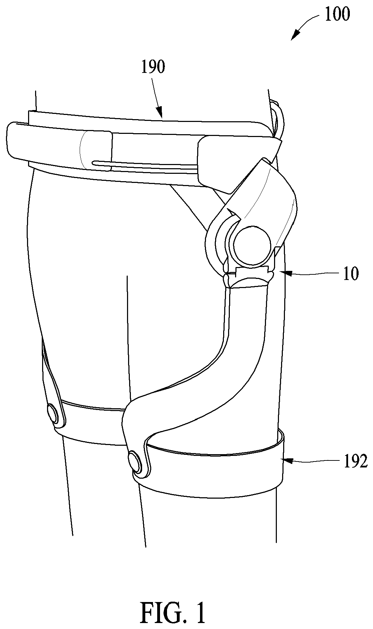

FIG. 1 is a diagram illustrating a user wearing a motion assistance device according to an example embodiment.

Referring to FIG. 1, a motion assistance device 100 according to an example embodiment may be worn by a user and assist an exercise of the user. The user may be a human, an animal, or a robot, but examples are not limited thereto. The motion assistance device 100 includes a proximal support 190 (e.g., to be worn proximate a waist of a user), a distal support 192 (e.g., to be worn on a thigh of the user), and a driving assembly 10.

In an example embodiment, the proximal support 190 and the distal support 192 may be opposite to each other based on one body part of the user and respectively support a proximal part and a distal part. For example, the proximal support 190 may support a proximal part (e.g., waist and/or a pelvis) of the user and the distal support 192 may support a thigh, a knee, a calf, and/or a foot of the user. For example, the proximal support 190 may include a detachable belt for supporting the overall waist of the user, and the distal support 192 may include a detachable belt for supporting the overall thigh of the user.

As another example, the proximal support 190 and the distal support 192 may be opposite to each other based on the upper arm of the user. In this case, the proximal support 190 may support a shoulder and/or a back of the user and the distal support 192 may support a forearm of the user. For example, the proximal support 190 may include a detachable belt for supporting the shoulder of the user all around and the distal support 192 may include a detachable belt for supporting the forearm of the user all around or a structure enclosing the forearm of the user all around.

In an example embodiment, the driving assembly 10 may rotate the distal support 192 with respect to the proximal support 190. For example, the driving assembly 10 may rotate the distal support 192 with respect to the proximal support 190 based on a sagittal plane. That is, the driving assembly 10 may assist the user to perform flexion or extension exercises by rotating the distal support 192.

In an example embodiment, the proximal support 190 and the distal support 192 may rotate relative based on the frontal plane. For example, the driving assembly 10 may be disposed on one side of the proximal support 190.

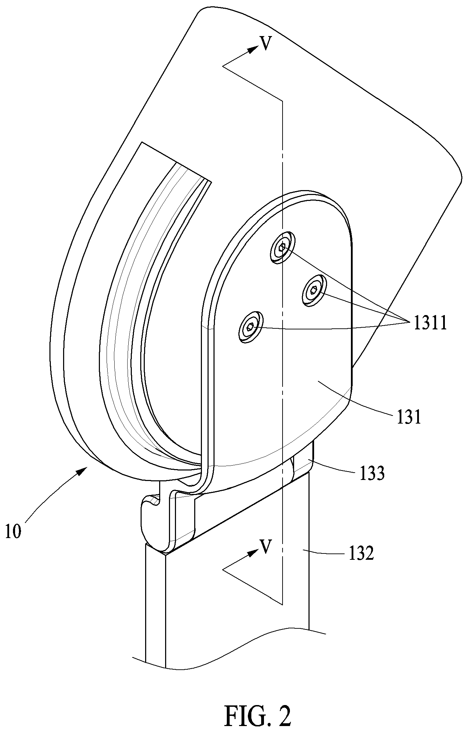

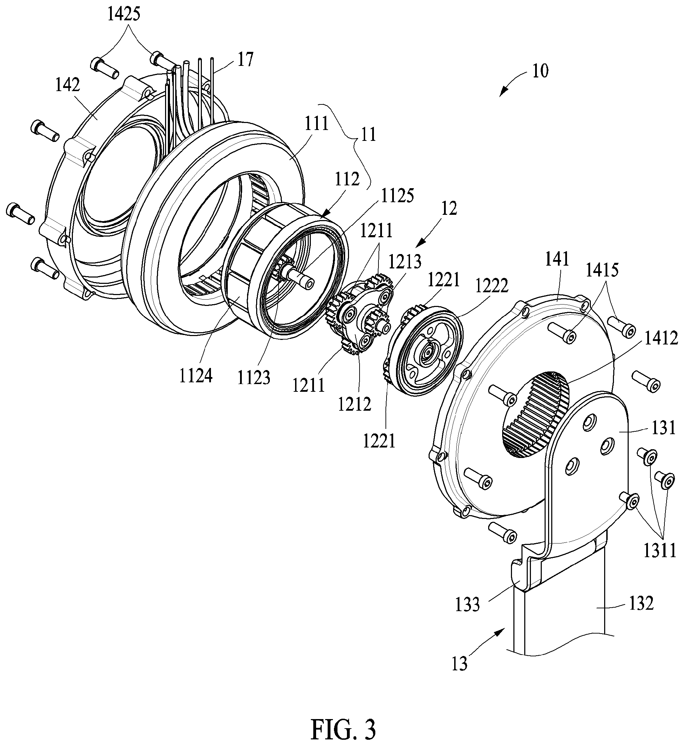

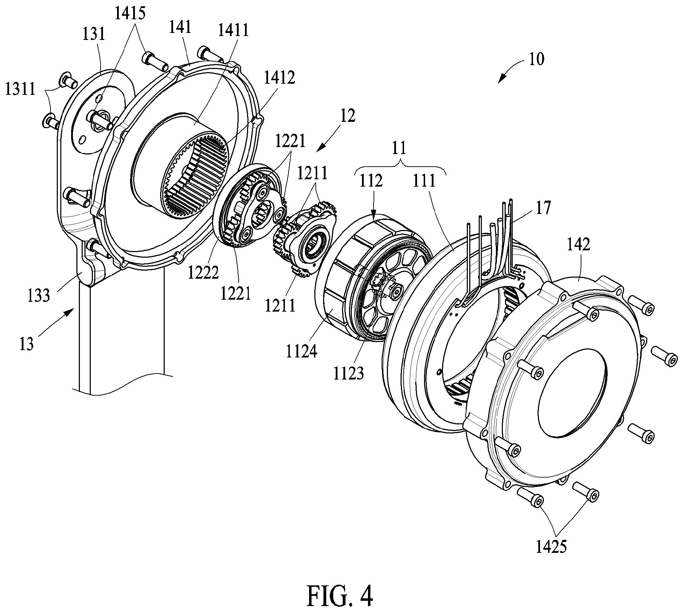

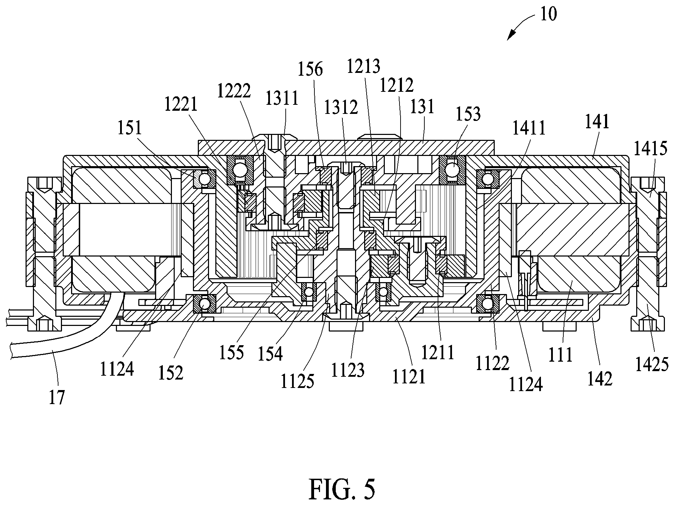

FIG. 2 is a perspective view of a driving assembly according to an example embodiment, FIG. 3 is an exploded perspective view of a front of the driving assembly according to an example embodiment, FIG. 4 is an exploded perspective view of a rear of the driving assembly according to an example embodiment, and FIG. 5 is a cross-sectional view of a motion assistance device illustrating a cross-sectional view taken along a line V-V of FIG. 2.

Referring to FIG. 2 to FIG. 5, the driving assembly 10 includes an actuator 11, a speed reducer 12, a driving frame 13, an upper cover 141, a lower cover 142, a plurality of bearings, and a connection line 17.

In an example embodiment, the actuator 11 may be a hollow actuator having an inner space. For example, the speed reducer 12 may be inserted in the inner space. According to this structure, a width of the driving assembly 10, that is, a vertical distance from the lower cover 142 to the driving frame 13 may be reduced. By reducing a total height of the driving assembly 10 protruding from the user, a total volume of the motion assistance device 100 (refer to FIG. 1) may be reduced, and for example, the user may wear the motion assistance device 100 inside clothes. The actuator 11 may include a stator 111 and a rotor 112.

In an example embodiment, the stator 111 may be connected to the proximal support 190. The stator 111 may generate a magnetic field to rotate the rotor 112. The stator 111, for example, may have a ring shape in which a hole is formed in a center part. For example, the stator 111 may have a donut shape. However, the shape of the stator 111 is not limited thereto.

In an example embodiment, the rotor 112 may rotate relative to the stator 111. For example, the rotor 112 may be surrounded by the stator 111. For example, the rotor 112 may have a cup shape. The rotor 112 may include a main plate 1121, a vertical extension part 1122, a sun gear 1123, a permanent magnet 1124, and a rotor axis 1125.

In an example embodiment, the main plate 1121 of the rotor 112 may be a plate parallel to a plane vertical to a central axis of the stator 111. The vertical extension part 1122 of the rotor 112 may be a part which vertically extends from an edge part of the main plate 1121 in one direction. The main plate 1121 and the vertical extension part 1122 of the rotor 112 may together have a cup shape. The speed reducer 12 may be inserted in a space formed by the main plate 1121 and the vertical extension part 1122.

In an example embodiment, a plurality of permanent magnets 1124 of the rotor 112 may be arranged along an outer circumferential surface of the vertical extension part 1122 of the rotor 112. For example, the permanent magnet 1124 may have a bent shape to have a same curvature as that of the vertical extension part 1122, and the plurality of permanent magnets 1124 may be arranged to be spaced apart by a predetermined distance. The permanent magnet 1124 may interact with the magnetic field generated by the stator 111. For example, when the permanent magnet 1124 of the rotor 112 interacts with the magnetic field generated by the stator 111, the rotor 112 may rotate in one direction.

In an example embodiment, the sun gear 1123 of the rotor 112 may be formed to protrude from the center of the main plate 1121. The sun gear 1123 may rotate integrally with the main plate 1121. For example, the rotor axis 1125 may be formed to protrude from the center of the main plate 1121, and the sun gear 1123 may be fixed to the rotor axis 1125. The sun gear 1123 of the rotor 112 may be an output end of the actuator 11. The output end of the actuator 11 may be connected to an input end of the speed reducer 12. For example, the sun gear 1123 may be connected to the input end of the speed reducer 12.

In an example embodiment, the upper cover 141 and the lower cover 142 may surround the actuator 11. The upper cover 141 and the lower cover 142 may fix the stator 111 and support the rotor 112 in a way that the rotor 112 may rotate relative to the stator 111. The lower cover 142 may be connected to the proximal support 190 and may fix the lower surface of the stator 111. The upper cover 141 may be connected to the lower cover 142 and may fix the upper surface of the stator 111. The stator 111 may have limited vertical and horizontal movement due to the lower cover 142 and the upper cover 141. That is, the stator 111 may be fixed between the lower cover 142 and the upper cover 141 without shaking.

In an example embodiment, the upper cover 141 may include a protrusion 1411, which extends towards the inner space of the stator 111. For example, the protrusion 1411 may be a cylindrical member formed to be protruding from the center part of the upper cover 141 to the lower cover 142. The vertical extension part 1122 of the rotor 112 may be between the protrusion 1411 of the upper cover 141 and the stator 111.

In an example embodiment, a lower cover fixing screw 1425 may connect the lower cover 142 to the proximal support 190 (refer to FIG. 1). The lower cover 142 may be fixed to the proximal support 190 by a lower cover fixing screw 1425. A plurality of lower cover fixing screws 1425 may be provided along the circumference of the lower cover 142.

In an example embodiment, an upper cover fixing screw 1415 may connect the upper cover 141 to the lower cover 142. The upper cover 141 may be fixed to the lower cover 142 by the upper cover fixing screw 1415. A plurality of upper cover fixing screws 1415 may be provided along the circumference of the upper cover 141.

In an example embodiment, the plurality of bearings may support the rotor 112 to rotate relative to the stator 111 stably. The plurality of bearings may support the rotor 112 to maintain a predetermined distance with the stator 111. That is, the plurality of bearings may prevent the rotor 112 from approaching the protrusion 1411 or the stator 111 of the upper cover 141.

In an example embodiment, the plurality of bearings may include a first inner bearing 151, a second inner bearing 152, and a third inner bearing 153. The first inner bearing 151 may be disposed between the rotor 112 and the upper cover 141. The second inner bearing 152 may be disposed between the rotor 112 and the lower cover 142.

In an example embodiment, the first inner bearing 151 may contact the upper surface and the inner side surface of the rotor 112 and the second inner bearing 152 may contact the lower surface and the outer side surface of the rotor 112. According to this arrangement, the first inner bearing 151 and the second inner bearing 152 may prevent shaking of the rotor 112 in a vertical direction and shaking of the rotor 112 in a horizontal direction. That is, the center of the rotor 112 may maintain a match with the center of the stator 111.

In an example embodiment, the speed reducer 12 may be inserted inside the actuator 11. For example, the speed reducer 12 may be inserted in a space surrounded by the vertical extension part 1122 of the rotor 112. The sun gear 1123, which is the output end of the actuator 11, may be connected to the input end of the speed reducer 12. Hereinafter, a deceleration mechanism of the speed reducer 12 is described in detail.

In an example embodiment, the main plate 1121 of the rotor 112 may include the rotor axis 1125, which is formed to protrude from the center, and the first sun gear 1123, which is fixed to the rotor axis 1125. The protrusion 1411 of the upper cover 141 may include a ring gear 1412 formed from the inner side surface to the center. The speed reducer 12 may include a plurality of first planetary gears 1211, a first carrier 1212, a second sun gear 1213, a plurality of second planetary gears 1221, and a second carrier 1222.

In an example embodiment, the plurality of first planetary gears 1211 may be connected to the sun gear 1123, which is the output end of the actuator 11. The second carrier 1222 may be connected to the driving frame 13. That is, the second carrier 1222 may be an output end of the speed reducer 12.

In an example embodiment, the plurality of first planetary gears 1211 may be arranged between the first sun gear 1123 and the ring gear 1412. The first planetary gears 1211, for example, may be arranged to be spaced apart by a predetermined distance along the circumference of the first sun gear 1123. The first planetary gear 1211 may have a gear shape engaging with the first sun gear 1123. One side of the first planetary gear 1211 may contact the first sun gear 1123, and the other side of the first planetary gear 1211 may contact the ring gear 1412. Since the ring gear 1412 is formed in the protrusion 1411 of the upper cover 141, the ring gear 1412 may maintain a fixed state. When the first sun gear 1123 rotates, the plurality of first planetary gears 1211 may rotate along the circumference of the first sun gear 1123.

In an example embodiment, the first carrier 1212 may be connected to the central axis of the plurality of first planetary gears 1211. When the central axis of the plurality of first planetary gears 1211 revolves around the first sun gear 1123, the first carrier 1212 may rotate around the first sun gear 1123 in the same rotation angular velocity as the revolution angular velocity of the central axis of the plurality of first planetary gears 1211. Since the central axis of each of the plurality of first planetary gears 1211 are coupled by the first carrier 1212, the central axis of each of the plurality of first planetary gears 1211 may revolve in the same revolution angular velocity as the first carrier 1212. The rotation speed of the first carrier 1212 may be reduced relative to the rotation speed of the first sun gear 1123. That is, the torque output from the first carrier 1212 may be greater than the torque transmitted from the first sun gear 1123 to the first planetary gear 1211.

In an example embodiment, the second sun gear 1213 may be formed in the center of the first carrier 1212. The second sun gear 1213 may be formed on the opposite side of the plurality of first planetary gears 1211. For example, with reference to FIG. 5, when the central axis of the plurality of first planetary gears 1211 is connected to the lower surface of the first carrier 1212, the second sun gear 1213 may be formed on the upper surface of the first carrier 1212. The second sun gear 1213 may rotate by the same angular velocity as that of the first carrier 1212.

In an example embodiment, the plurality of second planetary gears 1221 may be arranged between the second sun gear 1213 and the ring gear 1412. The second planetary gears 1221, for example, may be arranged to be spaced apart by a predetermined distance along the circumference of the second sun gear 1213. The second planetary gear 1221 may have a gear shape engaging with the second sun gear 1213. One side of the second planetary gear 1221 may contact the second sun gear 1213, and the other side of the second planetary gear 1221 may contact the ring gear 1412. Since the ring gear 1412 is formed in the protrusion 1411 of the upper cover 141, it may maintain a fixed state. When the second sun gear 1213 rotates, the plurality of second planetary gears 1221 may revolve along the circumference of the second sun gear 1213.

In an example embodiment, the second carrier 1222 may be connected to the central axis of the plurality of second planetary gears 1221. When the central axis of the plurality of second planetary gears 1221 revolves around the second sun gear 1213, the second carrier 1222 may rotate around the second sun gear 1213 in the same rotation angular velocity as the revolution angular velocity of the central axis of the plurality of second planetary gears 1221. Since the central axis of each of the plurality of second planetary gears 1221 are coupled by the second carrier 1222, the central axis of each of the plurality of second planetary gears 1221 may revolve in the same revolution angular velocity as the second carrier 1222. The rotation speed of the second carrier 1222 may be reduced relative to the rotation speed of the first carrier 1212. That is, the torque output from the second carrier 1222 may be bigger in size than the torque output from the first carrier 1212. The second carrier 1222 may be an output end of the speed reducer 12. The driving torque generated by the driving assembly 10 may increase from the input end of the speed reducer 12 to the output end of the speed reducer 12.

In an example embodiment, one end of the driving frame 13 may be connected to the output end of the speed reducer 12. For example, one end of the driving frame 13 may be connected to the second carrier 1222. The other end of the driving frame 13 may be connected to the distal support 192 (refer to FIG. 1). The driving frame 13 may transmit the power received from the speed reducer 12 to the distal support 192.

FIGS. 3 to 5 illustrate the speed reducer 12 as including two planetary gear sets. However, the structure of the speed reducer 12 is not limited thereto. For example, the speed reducer 12 may be composed of one set of first and second planetary gears 1211 and 1221. For example, the first carrier 1212 of the speed reducer 12 may be directly connected to the driving frame 13.

In an example embodiment, the plurality of bearings may prevent shaking of the rotation axis of each of the first sun gear 1123, the first planetary gear 1211, the first carrier 1212, the second sun gear 1213, the second planetary gear 1221, and the second carrier 1222.

In an example embodiment, with reference to FIG. 5, the first inner bearing 151 may contact the upper surface and the inner side surface of the rotor 112 and the second inner bearing 152 may contact the lower surface and the outer side surface of the rotor 112. According to this arrangement, the first inner bearing 151 and the second inner bearing 152 may prevent shaking of the rotor 112 in a vertical direction and a horizontal direction. That is, the first inner bearing 151 and the second inner bearing 152 may match the center of the rotor 112 with the center of the stator 111. According to this structure, shaking of the rotation axis of the first sun gear 1123 may be prevented.

In an example embodiment, the third inner bearing 153 may be disposed between the upper cover 141 and the second carrier 1222. The second carrier 1222 may receive a radial force according to the movement of the driving frame 13. When the radial force is applied to the second carrier 1222, the third inner bearing 153 may prevent shaking of the second carrier 1222. That is, the third inner bearing 153 may prevent shaking of the rotation axis of the second carrier 1222.

In an example embodiment, a fourth bearing 154 may be disposed between the lower side of the first carrier 1212 and the rotor axis 1125 supporting the plurality of first planetary gears 1211. For example, the fourth bearing 154 may support the first carrier 1212 to smoothly rotate along the outer circumferential surface of the rotor axis 1125. The fourth bearing 154 may maintain a predetermined distance between the lower side of the first carrier 1212 and the rotor axis 1125.

In an example embodiment, a fifth bearing 155 may be disposed between the upper side of the first carrier 1212 and the rotor axis 1125 supporting the plurality of first planetary gears 1211. For example, the fifth bearing 155 may support the first carrier 1212 to rotate smoothly along the outer circumferential surface of the rotor axis 1125. The fifth bearing 155 may maintain a predetermined distance between the upper side of the first carrier 1212 and the rotor axis 1125.

In an example embodiment, the fourth bearing 154 and the fifth bearing 155 may each support the lower side and the upper side of the first carrier 1212 to prevent shaking of the first carrier 1212 and the plurality of first planetary gears 1211.

In an example embodiment, a sixth bearing 156 may be disposed between the rotor axis 1125 and the second carrier 1222. For example, the sixth bearing 156 may support the second carrier 1222 to rotate along the outer circumferential surface of the rotor axis 1125. The sixth bearing 156 may maintain a predetermined distance between the rotor axis 1125 and the second carrier 1222. The sixth bearing 156 may prevent shaking of the second carrier 1222.

In an example embodiment, the sixth bearing 156 may be a flange-type bearing. The cylindrical part of the sixth bearing 156 may be inserted in a hole formed at the center of the second carrier 1222, and a rotor axis fixing screw 1312 may overlap the flange part to prevent the sixth bearing 156 from being separated from the second carrier 1222. The rotor axis fixing screw 1312 may be screwed with the rotor axis 1125. For example, the rotor axis 1125 may have screw threads in the inner circumferential surface of the rotor axis 1125, and the rotor axis fixing screw 1312 may have screw threads in the outer circumferential surface of the rotor axis fixing screw 1312.

In an example embodiment, the driving frame 13 may be rotatably connected to one side of the proximal support 190. The fixing plate 131 of the driving frame 13 may be connected to the speed reducer 12 (refer to FIG. 3) of the driving assembly 10 by at least one frame fixing screw 1311. A bearing or a friction-reducing plate may be provided between the fixing plate 131 and the upper cover 141.

In an example embodiment, the driving frame 13 may include a fixing plate 131, which is connected to a speed reducer 12 (refer to FIG. 3), a hinge 133, which is connected to one end of the fixing plate 131, and a pivot bar 132, which is connected to the hinge 133. The part of the fixing plate 131, which is connected to the hinge 133, may have a curved shape towards the proximal part of the user. According to such a shape, the axis of the hinge 133 may be close to the adduction and abduction axes of the user's hip joint. The pivot bar 132 may be connected to the distal support 192 of the user.

In an example embodiment, the connection line 17 may be connected to the stator 111 and extend to the outside. The connection line 17 may electrically connect a control unit (not shown) and the stator 111. The control unit may control the magnetic field generated by the stator 111.

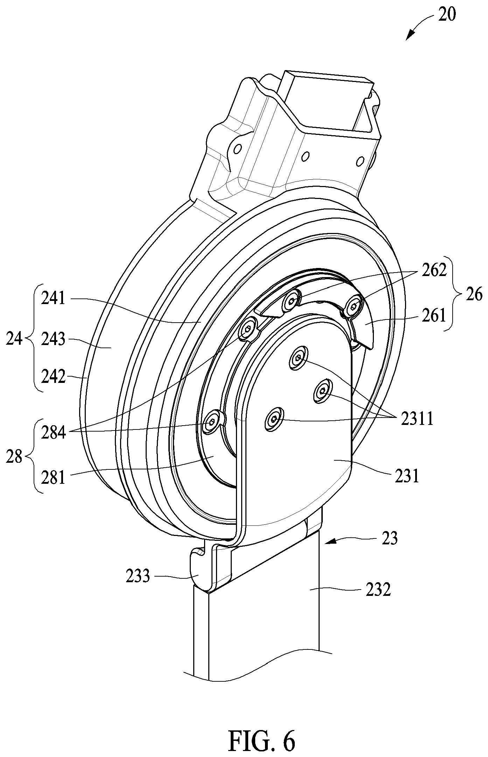

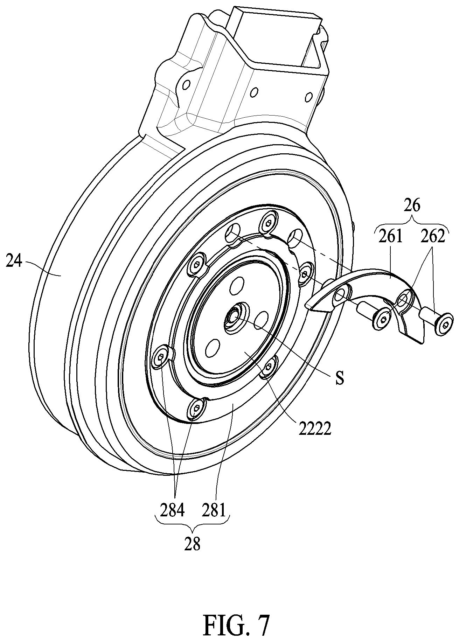

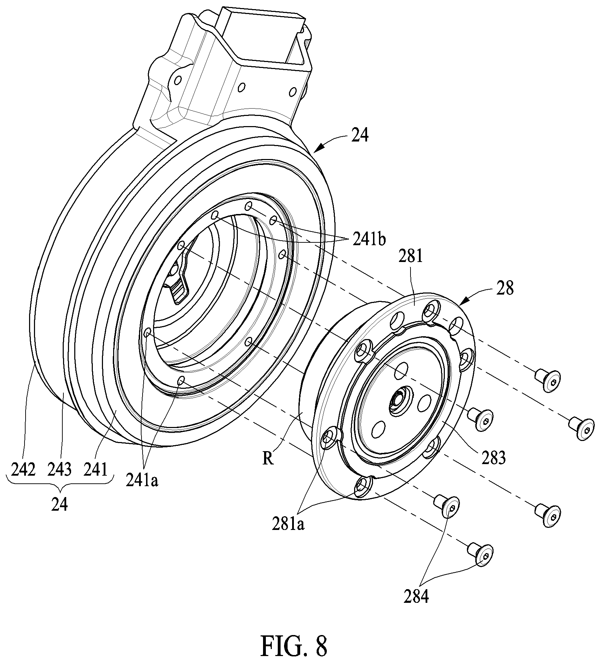

FIG. 6 is a perspective view of a driving assembly according to an example embodiment, FIG. 7 is an exploded perspective view of a driving assembly of FIG. 6 from which the stopper is omitted, and FIG. 8 is an exploded perspective view of a driving assembly of FIG. 7 from which a speed reducer is omitted.

Referring to FIG. 6 to FIG. 8, a driving assembly 20 may have a structure, which is assembled by several steps. The driving assembly 20 includes a housing 24, a supporting part 28, which is detachably connected to the housing 24, a speed reducer, which is supported by the supporting part 28, a driving frame 23, which is connected to the supporting part 28, and a stopper 26, which is connected to the speed reducer. The speed reducer is inserted in the housing 24 while being connected to the supporting part 28. FIG. 8 illustrates a ring gear R of the speed reducer that is supported by the supporting part 28.

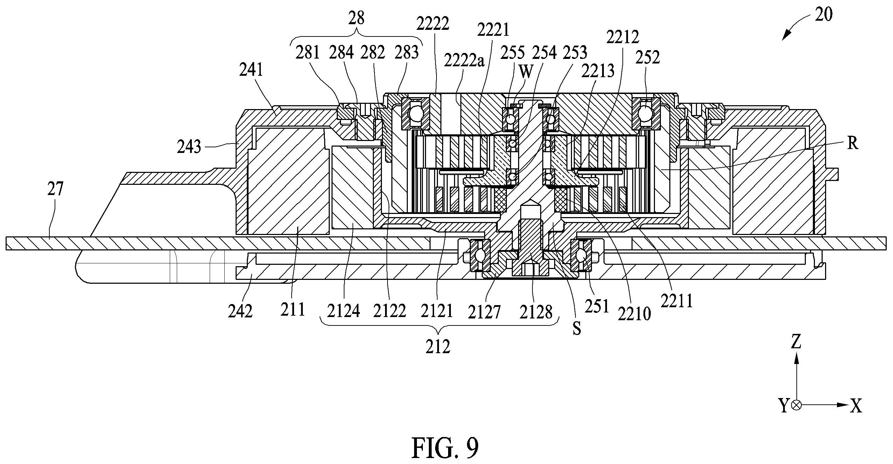

In an example embodiment, the ring gear R may be separated from the housing 24. At least one sun gear, at least one planetary gear, and at least one carrier may be provided inside the ring gear R. The specific structure of the speed reducer is described in detail with reference to FIGS. 9 to FIGS. 11.

In an example embodiment, the speed reducer may include a main shaft S, which functions as an input end, and a second carrier 2222, which functioning as an output end. Power generated by an actuator may be transmitted to the speed reducer through the main shaft S, which is the input end of the speed reducer. The power transmitted to the speed reducer may be decelerated and be transmitted to the second carrier 2222, which is the output end.

In an example embodiment, the housing 24 may support the actuator. For example, the housing 24 may support a stator (e.g., the stator 111 of FIG. 5). A rotor (e.g., the rotor 112 of FIG. 5) may be provided rotatably inside the housing 24. The housing 24 may fix the stator of the actuator. The housing 24 may include an upper cover 241, a lower cover 242, and a side cover 243. The lower cover 242 may face the body of the user. The lower cover 242 may support the lower side of the actuator. The upper cover 241 may cover the upper side of the actuator. The side cover 243 may cover the side of the actuator. The upper cover 241 may include a plurality of first accommodating parts 241a and a plurality of second accommodating parts 241b.

In an example embodiment, the plurality of first accommodating parts 241a may be grooves formed to be recessed from the surface of the upper cover 241, or holes formed to penetrate the upper cover 241. The plurality of first accommodating parts 241a may be located along the circumferential direction based on the rotation axis of the rotor. For example, the plurality of first accommodating parts 241a may be arranged by an equal distance. For example, "6" first accommodating parts 241a may be provided. For example, screw threads may be formed on the inner surface of the plurality of first accommodating parts 241a.

In an example embodiment, the plurality of second accommodating parts 241b may be grooves formed to be recessed from the surface of the upper cover 241, or holes formed to penetrate the upper cover 241. The second accommodating parts 241b may be between "2" adjacent first accommodating parts 241a among the plurality of first accommodating parts 241a. For example, screw threads may be formed on the inner surface of the plurality of second accommodating parts 241b. For example, "2" second accommodating parts 241b may be provided.

In an example embodiment, the supporting part 28 may be detachably connected to the housing 24. The supporting part 28 may include a base frame 281, which is detachably connected to the upper cover 241. The supporting part 28 may include an extension frame 283, which is formed to extend inward from the base frame 281. The extension frame 283 may cover the upper side of the speed reducer to prevent the speed reducer from being separated upward. The supporting part 28 may include at least one frame fastening member 284, which fastens the base frame 281 to the upper cover 241, through openings 281a. For example, the frame fastening member 284 may be a screw. However, the frame fastening member 284 is not limited to screws. For example, as for the frame fastening member 284, a structure for fastening the supporting part 28 to the housing 24 is sufficient. The frame fastening member 284 may pass through the upper cover 241 and be fastened to the housing 24. For example, the frame fastening member 284 may be formed on the outer surface and may provide screw threads which are screwed with the plurality of first accommodating parts 241a.

In an example embodiment, the stopper 26 may be detachably connected to the supporting part 28. The stopper 26 may be located on a movement path of the driving frame 23. For example, the stopper 26 may limit the rotation angle of the driving frame 23. The stopper 26 may, for example, support the stopper 26 so that the stopper 26 does not rotate clockwise excessively or rotate counterclockwise excessively. For example, the stopper 26 may limit the rotation angle range of the driving frame 23 within 180 degrees. According to the stopper 26, the driving frame 23 may be prevented from excessively rotating, so the joint of the user may be prevented from being unintentionally burdened. The stopper 26 may include a stopper body 261, which is disposed on one surface of the supporting part 28, and a stopper fastening member 262, which fastens the stopper body 261 to the supporting part 28. For example, at least "2" stopper fastening members 262 may be provided. The stopper fastening member 262 may be connected to at least "2" points of the stopper body 261 to support and prevent the stopper body 261 from rotating.

For example, with the supporting part 28 fixed to the housing 24, the stopper 26 may be separated from the supporting part 28. For example, the stopper 26 may not overlap the upper cover 241. The user may separate the supporting part 28 from the housing 24 even when the stopper 26 is fastened to the supporting part 28.

In an example embodiment, the driving frame 23 may be connected to the output end of the speed reducer. The driving frame 23 may include a fixing plate 231 which is fixed to the output end of the speed reducer, a hinge 233 which is connected to one end of the fixing plate 231, a pivot bar 232 which is rotatably connected to the hinge 233, and at least one frame fixing screw 2311, which fastens the fixing plate 231 to the speed reducer. The axis of the hinge 233 may be close to the adduction and abduction axes of the user's hip joint. The pivot bar 232 may be connected to a distal support (e.g., the distal support 192 of FIG. 1) of the user. The driving frame 23 may transmit the power received from the speed reducer to the distal support (e.g., the distal support 192 of FIG. 1). At least "2" frame fixing screws 2311 may be provided.

In an example embodiment, the speed reducer and the supporting part 28 may be separated from the housing 24. The speed reducer and the supporting part 28 may be easily replaced. When the supporting part 28 is separated from the housing 24, the speed reducer may be separated from the housing 24. Likewise, when the supporting part 28 is inserted in the housing 24, the speed reducer may be connected to the actuator. The user may easily maintain, repair, and/or replace the speed reducer by separating the supporting part 28 from the housing 24.

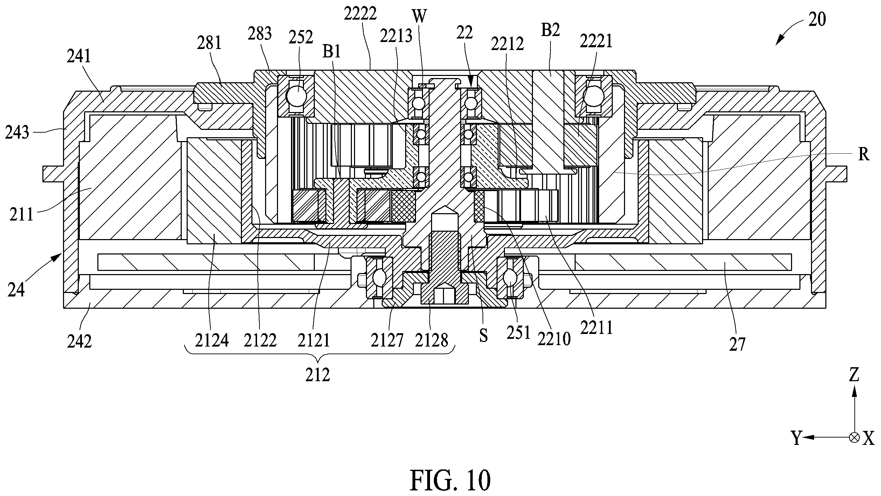

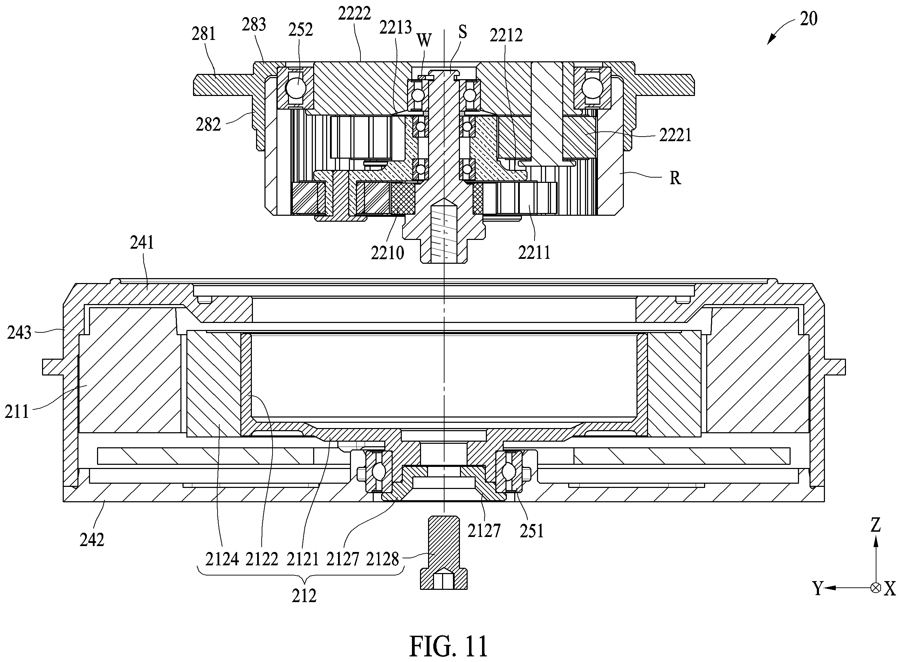

FIG. 9 is a cross-sectional view of a driving assembly according to an example embodiment, FIG. 10 is a cross-sectional view of the driving assembly according to an example embodiment, and FIG. 11 is an exploded cross-sectional view of the driving assembly according to an example embodiment.

Referring to FIGS. 9 to 11, the driving assembly 20 includes actuators 211 and 212, a speed reducer 22, a housing 24, a plurality of bearings 251, 252, 253, 254, and 255, a washer W, a printed circuit board 27, and a supporting part 28.

In an example embodiment, the actuators 211 and 212 includes the stator 211 and the rotor 212. The stator 211 may be fixed to the housing 24. The stator 211 may be electrically connected to the control unit (not shown) through the printed circuit board 27. The printed circuit board 27 may control the magnetic field generated by the stator 211. The control unit (not shown), for example, may be provided in the proximal support (e.g., the proximal support 190 of FIG. 1). The control unit (not shown) may control the rotation speed of the rotor 212 by adjusting the strength of the magnetic field generated by the stator 211.

In an example embodiment, the rotor 212 may rotate relative to the stator 211. For example, the rotor 212 may be surrounded by the stator 211. The rotor 212 may provide an inner space for accommodating the speed reducer. For example, the rotor 212 may have a cup shape. The rotor 212 may include a main plate 2121, a vertical extension 2122, a permanent magnet 2124, a cap 2127, and a cap fastening member 2128.

In an example embodiment, the main plate 2121 may be provided in parallel with the lower cover 242. The main plate 2121 may rotate relative to the lower cover 242. The main plate 2121 may rotate around the main shaft S. The main shaft S may be provided in parallel to a Z-axis. In the present application, the up direction refers to the +Z direction, and the down direction refers to the -Z direction.

In an example embodiment, the vertical extension 2122 may be formed to extend upward from the edge of the main plate 2121. The vertical extension 2122 may be between the stator 211 and the speed reducer 22. For example, the inner side surface of the vertical extension 2122 may face the outer side surface of the ring gear R and the outer side surface of the vertical extension 2122 may face the permanent magnet 2124. The permanent magnet 2124 may interact with the stator 211.

In an example embodiment, the plurality of permanent magnets 2124 may be arranged along the outer circumferential surface of the vertical extension 2122. For example, the permanent magnet 2124 may have a bent shape to have a same curvature as that of the vertical extension part 2122 and the plurality of permanent magnets 2124 may be arranged to be spaced apart by a predetermined distance.

In an example embodiment, the cap 2127 may cover the main plate 2121. For example, the cap 2127 may cover the lower side of the main plate 2121. The cap 2127 may be spaced apart from the lower cover 242. A gap may be provided between the cap 2127 and the lower cover 242. The cap 2127 may rotate relative to the lower cover 242.

In an example embodiment, the cap fastening member 2128 may fasten the cap 2127 to the speed reducer 22. The cap fastening member 2128 may be detachably connected to the speed reducer 22. For example, the cap fastening member 2128 may have a shape of engaging with the main shaft S of the speed reducer 22. The cap fastening member 2128 may be connected to the main plate 2121 and the main shaft S to rotate at the same time. The main plate 2121, the main shaft S, and the cap fastening member 2128 may rotate at the same rotation speed. The cap fastening member 2128 may have a shape that inserts in the lower cover 242. For example, the cap fastening member 2128 may have a shape not protruding outward from the lower surface of the lower cover 242. At least a part of the cap fastening member 2128 may cover the lower bearing 251. The cap fastening member 2128 may prevent the lower bearing 251 from being separated downward.

In an example embodiment, the speed reducer 22 may be separated from the housing 24 with the supporting part 28. The speed reducer 22 may include a main shaft S functioning as an input end, a first sun gear 2210 which is fixed on the lower side of the main shaft S, a ring gear R which is provided in a supported state by the supporting part 28, a plurality of first planetary gears 2211 which is arranged between the first sun gear 2210 and the ring gear R and engages with the first sun gear 2210 and the ring gear R, a first carrier 2212 which is connected to the central axis of each of the plurality of first planetary gears 2211, a second sun gear 2213 which is connected to the first carrier 2212, a plurality of second planetary gears 2221 which is arranged between the second sun gear 2213 and the ring gear R and engages with the second sun gear 2213 and the ring gear R, and the second carrier 2222 which is connected to the central axis of each of the plurality of second planetary gears 2221 and connected to the driving frame (e.g., the driving frame 23 of FIG. 6). The first planetary gear 2211 may be connected to the first carrier 2212 through a first bolt B1, and the second planetary gear 2221 may be connected to the second carrier 2222 through a second bolt B2.

In an example embodiment, the first sun gear 2210 may rotate at the same speed as the rotor 212. For example, the first sun gear 2210 may be fixed to the main shaft S so that movement of the first sun gear 2210 relative to the main shaft S is limited. The first sun gear 2210, the first carrier 2212, the second carrier 2222 may rotate at different speeds. For example, the first sun gear 2210 may rotate at the relatively fastest speed. The first carrier 2212 may be decelerated by the plurality of first planetary gears 2211 and may rotate at a relatively slower speed than the first sun gear 2210. The second carrier 2222 may be decelerated once more by the plurality of second planetary gears 2221 and may rotate at a relatively slower speed than the first carrier 2212.

In an example embodiment, the plurality of second planetary gears 2221 may be located at the upper part of the first planetary gear 2211. "3" first planetary gears 2211 and "3" second planetary gears 2221 may be provided, but the numbers thereof are not limited thereto. The first carrier 2212 and the second sun gear 2213 may be formed integrally.

In an example embodiment, the second carrier 2222 may include a plurality of carrier holes 2222a. The plurality of carrier holes 2222a may include the frame fixing screw. For example, the plurality of carrier holes 2222a and the frame fixing screw 2311 may have a screw thread shape engaging with each other. For example, the plurality of carrier holes 2222a may be provided in the same number as the frame fixing screws 2311.

In an example embodiment, the housing 24 may include a lower cover 242 which supports the rotor 212 in a way that the rotor 212 is rotatable, a side cover 243 which extends from the lower cover 242 and is configured to cover a side surface of the stator 211, and an upper cover 241 which extends from the side cover 243 and is configured to cover the upper surface of the stator 211.

In an example embodiment, the plurality of bearings 251, 252, 253, 254, and 255 may support the rotation of the rotor 212 and the speed reducer 22. For example, the plurality of bearings 251, 252, 253, 254, and 255 may include the lower bearing 251, the upper bearing 252, the first inner bearing 253, the second inner bearing 254, and the third inner bearing 255.

In an example embodiment, the lower bearing 251 may be disposed between the rotor 212 and the housing 24. For example, the lower bearing 251 may be disposed between the lower cover 242 and the main plate 2121. The lower bearing 251 may support the main plate 2121 to smoothly rotate relative to the lower cover 242.

In an example embodiment, the upper bearing 252 may be disposed between the ring gear R and the second carrier 2222. For example, the upper bearing 252 may be disposed between the inner side surface of the ring gear R and the outer side surface of the second carrier 2222. The upper bearing 252 may support the second carrier 2222 to smoothly rotate relative to the ring gear R.

In an example embodiment, the first inner bearing 253, the second inner bearing 254, and the third inner bearing 255 may be disposed inside the speed reducer 22. The first inner bearing 253 may be disposed between the main shaft S and the first carrier 2212. The second inner bearing 254 may be disposed between the main shaft S and the second sun gear 2213. The third inner bearing 255 may be disposed between the main shaft S and the second carrier 2222. For example, the third inner bearing 255 may be disposed between the outer side surface of the main shaft S and the inner side surface of the second carrier 2222. The third inner bearing 255 may support the second carrier 2222 to smoothly rotate relative to the main shaft S.

In an example embodiment, the washer W may be inserted in the main shaft S and cover the third inner bearing 255. The washer W may support the third inner bearing 255 so that the third inner bearing 255 is not separated upward. The main shaft S may include a lower protrusion, which supports the first sun gear 2210. By the main shaft S and the washer W, the gear set of the speed reducer 22 may maintain a compact structure.

In an example embodiment, the supporting part 28 may include the base frame 281, a supporting frame 282, the extension frame 283, and the frame fastening member 284. The base frame 281 may overlap with the housing 24 based on the rotation axis of the rotor 212. The base frame 281 is detachable from the housing 24. The supporting frame 282 may extend from the base frame 281, at least a part of the supporting frame 282 may be located inside the stator 211, and support the speed reducer 22. The extension frame 283 may extend inward from the base frame 281 and may overlap with the speed reducer 22 based on the rotation axis direction of the rotor 212. The frame fastening member 284 may fasten the base frame 281 to the upper cover 241.

In an example embodiment, a driving assembly may easily replace a speed reducer. According to an example embodiment, it is possible to combine various different speed reducers while using the same platform. For example, it is possible to only replace the speed reducer while maintaining mechanisms and hardware other than the speed reducer and use the driving assembly as necessary.

For example, it is possible to assist the running exercise of the user by using the same motor and a high-speed or low-torque speed reducer. In another example, it is possible to assist the climbing of the user by using the same motor and a high-speed or low-torque speed reducer. Due to these characteristics, it is possible to boost the utilization of the wearable device by designing the speed reducer to be replaceable.

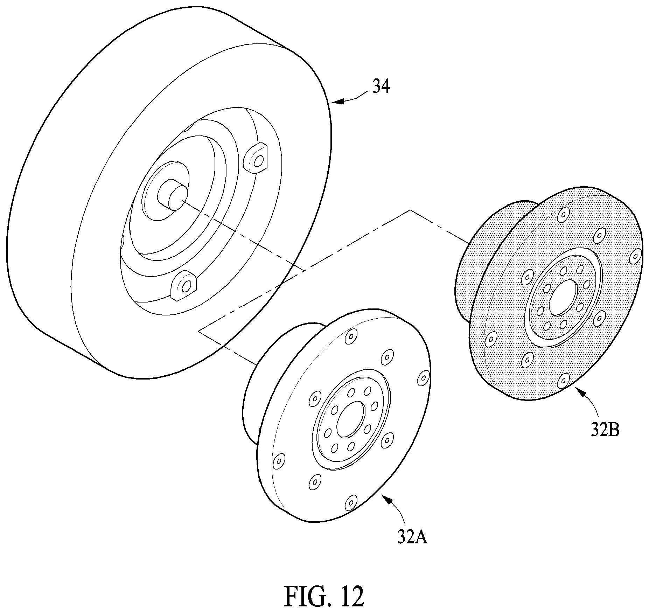

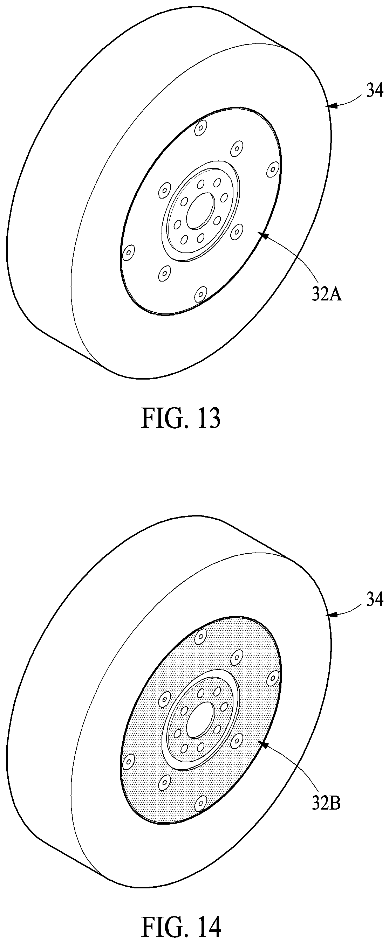

FIG. 12 is an exploded perspective view schematically illustrating when two different speed reducers are waiting to be connected to a housing according to an example embodiment, FIG. 13 is a perspective view schematically illustrating when a first speed reducer is connected to a housing according to an example embodiment, and FIG. 14 is a perspective view schematically illustrating when a second speed reducer is connected to a housing according to an example embodiment.

Referring to FIGS. 12 to 14, a driving assembly may include a housing 34 and speed reducers 32A and 32B, which are connected detachably with each other. The speed reducers 32A and 32B may include a first speed reducer 32A and a second speed reducer 32B. The first speed reducer 32A is driven at a relatively low speed and may have an output end, which generates a relatively large torque. The second speed reducer 32B is driven at a relatively high speed and may have an output end, which generates a relatively small torque. The housing 34 may be connected to the first speed reducer 32A or the second speed reducer 32B.

The user may replace the speed reducer according to the purpose of use of the driving assembly. For example, in the case of a task requiring a relatively large torque, the user may use the driving assembly while the first speed reducer 32A is coupled to the housing 34. Moreover, in the case of a task requiring a relatively small torque, such as general walking, the user may use the driving assembly while the second speed reducer 32B is coupled to the housing 34.

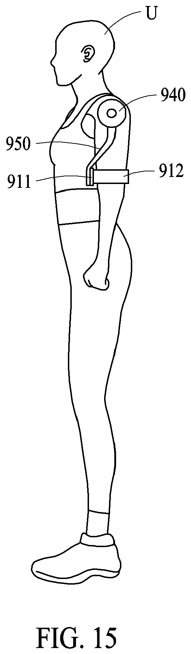

FIG. 15 is a diagram schematically illustrating a user wearing a wearable module of a motion assistance device on the upper arm according to an example embodiment.

Referring to FIG. 15, the motion assistance device may be worn on the upper arm of the user U. For example, a driving assembly 940 may be provided near the shoulder of the user U. The driving assembly 940 may generate power for assisting the movement of the upper arm. A driving frame 950 may be connected to the driving assembly 940 and may be disposed along the upper arm of the user U.

In an example embodiment, a cover 911 may be connected to the end of the driving frame 950 and may support a part of the upper arm of the user. A strap 912 may be connected to the cover 911. The strap 912 may be connected to the cover 911 to support the rest of the upper arm.

As described above, although the examples have been described with reference to the limited drawings, a person skilled in the art may apply various technical modifications and variations based thereon. For example, suitable results may be achieved if the described techniques are performed in a different order and/or if components in a described system, architecture, device, or circuit are combined in a different manner and/or replaced or supplemented by other components.

Accordingly, other implementations are within the scope of the following claims.

## Claims

1. A motion assistance device comprising:
a proximal support (190) configured to be worn on a proximal part of a user;
a distal support (192) configured to be worn a distal part of the user;
a driving assembly (20) which is connected to the proximal support (190) and configured to generate power; and
a driving frame (23) configured to transmit a force from the driving assembly (20) to the distal support,
wherein the driving assembly (20) comprises:
a housing (24) being connected to the proximal support;
an actuator comprising a stator (211) and a rotor (212), wherein the stator (211) is fixed to the housing (24) and has a ring shape, wherein the rotor (212) is located inside the stator (211) and rotatable relative to the stator (211);
a speed reducer (22) which is inserted inside the rotor (212) and comprises an input end which is connected to an output end of the actuator; and
a supporting part (28) being connected to the speed reducer (22) and connected detachably to the housing (24),
wherein the speed reducer (22) is connected to the supporting part (28) while being inserted into the housing.

2. The motion assistance device of any of the preceding claims, wherein the driving frame (23) is configured to connect an output end of the speed reducer (12) to the distal part and is capable of motion relative to the supporting part.

3. The motion assistance device of any of the preceding claims, wherein the supporting part (28) comprises:
a base frame (281) which overlaps with the housing (24) in the direction of a rotation axis of the rotor (212) and is connected detachably to the housing (24); and
a supporting frame (282) which extends from the base frame (281), is at least partially located inside the stator (211), and supports the speed reducer (22).

4. The motion assistance device of any of the preceding claims, wherein the supporting part (28) further comprises an extension frame (283) which extends from the base frame (281) and overlaps with the speed reducer (22) in the direction of a rotation axis of the rotor (212).

5. The motion assistance device of any of the preceding claims, wherein the supporting part (28) further comprises a frame fastening member (284) configured to fasten the supporting part (28) to the housing (24).

6. The motion assistance device of any of the preceding claims, wherein the housing (24) comprises:
a lower cover (242) configured to support the rotor (212) in a way that the rotor (212) is rotatable;
a side cover (243) which extends from the lower cover (242) and is configured to cover a side surface of the stator (211); and
an upper cover (241) which extends from the side cover (243) and is configured to cover an upper surface of the stator (211).

7. The motion assistance device of any of the preceding claims, wherein the rotor (212) comprises:
a main plate (2121) which is provided in parallel with the lower cover (242); and
a vertical extension part (2122) which extends from the main plate and is between the stator and the speed reducer.

8. The motion assistance device of any of the preceding claims, wherein the rotor (212) further comprises:
a cap (2127) configured to cover the main plate (2121); and
a cap fastening member (2128) configured to fasten the cap (2127) to the speed reducer (22) and connected to the speed reducer (22).

9. The motion assistance device of any of the preceding claims, wherein the supporting part (28) and the speed reducer (22) are separable from the housing (24).

10. The motion assistance device of any of the preceding claims, wherein the speed reducer (22) comprises:
a main shaft (S) which is connected to the rotor (212) and rotates based on a rotation axis of the rotor (212);
a first sun gear (2210) which is fixed on the main shaft (S);
a ring gear (R) which is fixed on the supporting part (28) and surrounds the first sun gear (2210);
a plurality of first planetary gears (2211) which are arranged between the first sun gear (2210) and the ring gear (R) and engage with the first sun gear (2210) and the ring gear (R);
a first carrier (2212) which is connected to a central axis of each of the plurality of first planetary gears (2211);
a second sun gear (2213) which is connected to the first carrier (2212);
a plurality of second planetary gears (2221) which are arranged between the second sun gear (2213) and the ring gear (R) and engage with the second sun gear (2213) and the ring gear (R); and
a second carrier (2222) which is connected to a central axis of each of the plurality of second planetary gears (2221) and connected to the driving frame (23).

11. The motion assistance device of claim 10, wherein
the rotor (212) and the first sun gear (2210) are configured to rotate at a same speed, and
the first sun gear (1110), the first carrier (2212), and the second carrier (2222) are configured to rotate at different speeds.

12. The motion assistance device of claim 10, wherein the driving assembly (20) further comprises:
a lower bearing (251) which is arranged between the rotor (212) and the housing (24); and
an upper bearing (252) which is arranged between the ring gear (R) and the second carrier (2222).

13. The motion assistance device of claim 10, wherein the driving assembly (20) further comprises:
a first inner bearing (253) which is arranged between the main shaft (S) and the first carrier (2212);
a second inner bearing (254) which is arranged between the main shaft (S) and the second sun gear (2213); and
a third inner bearing (255) which is arranged between the main shaft and the second carrier (2222).

14. The motion assistance device of claim 13, wherein the driving assembly (20) further comprises a washer (W) which is inserted in the main shaft (S) and configured to cover the third inner bearing (255).

15. The motion assistance device of any of the preceding claims, wherein the driving assembly (20) further comprises a stopper (26) which is arranged in the supporting part (28) and located on a movement path of the driving frame (23).

## Patentansprüche

1. Bewegungsunterstützungsvorrichtung, umfassend:
eine proximale Stütze (190), die dazu ausgestaltet ist, an einem proximalen Teil eines Nutzers getragen zu werden;
eine distale Stütze (192), die dazu ausgestaltet ist, an einem distalen Teil des Nutzers getragen zu werden;
eine Antriebsanordnung (20), die mit der proximalen Stütze (190) verbunden und dazu ausgestaltet ist, Energie zu erzeugen; und
einen Antriebsrahmen (23), der dazu ausgestaltet ist, eine Kraft von der Antriebsanordnung (20) auf die distale Stütze zu übertragen,
wobei die Antriebsanordnung (20) Folgendes umfasst:
ein Gehäuse (24), das mit der proximalen Stütze verbunden ist;
einen Aktuator, der einen Stator (211) und einen Rotor (212) umfasst, wobei der Stator (211) an dem Gehäuse (24) befestigt ist und eine Ringform aufweist, wobei sich der Rotor (212) innerhalb des Stators (211) befindet und relativ zum Stator (211) drehbar ist;
einen Geschwindigkeitsreduzierer (22), der in den Rotor (212) eingesetzt ist und ein Eingangsende umfasst, das mit einem Ausgangsende des Aktuators verbunden ist; und
ein stützendes Teil (28), das mit dem Geschwindigkeitsreduzierer (22) verbunden und lösbar mit dem Gehäuse (24) verbunden ist,
wobei der Geschwindigkeitsreduzierer (22) mit dem stützenden Teil (28) verbunden ist, während er in das Gehäuse eingesetzt wird.

2. Bewegungsunterstützungsvorrichtung nach einem der vorhergehenden Ansprüche, wobei der Antriebsrahmen (23) dazu ausgestaltet ist, ein Ausgangsende des Geschwindigkeitsreduzierers (12) mit dem distalen Teil zu verbinden, und zu Bewegung relativ zum stützenden Teil in der Lage ist.

3. Bewegungsunterstützungsvorrichtung nach einem der vorhergehenden Ansprüche, wobei das stützende Teil (28) Folgendes umfasst:
einen Basisrahmen (281), der das Gehäuse (24) in der Richtung einer Drehachse des Rotors (212) überlappt und lösbar mit dem Gehäuse (24) verbunden ist; und
einen Stützrahmen (282), der sich vom Basisrahmen (281) erstreckt, sich wenigstens teilweise im Stator (211) befindet und den Geschwindigkeitsreduzierer (22) stützt.

4. Bewegungsunterstützungsvorrichtung nach einem der vorangehenden Ansprüche, wobei das stützende Teil (28) ferner einen Erweiterungsrahmen (283) umfasst, der sich vom Basisrahmen (281) erstreckt und den Geschwindigkeitsreduzierer (22) in der Richtung einer Drehachse des Rotors (212) überlappt.

5. Bewegungsunterstützungsvorrichtung nach einem der vorangehenden Ansprüche, wobei das stützende Teil (28) ferner ein Rahmenbefestigungselement (284) umfasst, das dazu ausgestaltet ist, das stützende Teil (28) am Gehäuse (24) zu befestigen.

6. Bewegungsunterstützungsvorrichtung nach einem der vorangehenden Ansprüche, wobei das Gehäuse (24) Folgendes umfasst:
eine untere Abdeckung (242), dazu ausgestaltet, den Rotor (212) in einer solchen Weise zu stützen, dass der Rotor (212) drehbar ist;
eine seitliche Abdeckung (243), die sich von der unteren Abdeckung (242) erstreckt und dazu ausgestaltet ist, eine Seitenfläche des Stators (211) abzudecken; und
eine obere Abdeckung (241), die sich von der seitlichen Abdeckung (243) erstreckt und dazu ausgestaltet ist, eine obere Fläche des Stators (211) abzudecken.

7. Bewegungsunterstützungsvorrichtung nach einem der vorhergehenden Ansprüche, wobei der Rotor (212) Folgendes umfasst:
eine Hauptplatte (2121), die parallel zur unteren Abdeckung (242) bereitgestellt ist; und
ein vertikales Erweiterungsteil (2122), das sich von der Hauptplatte erstreckt und zwischen dem Stator und dem Geschwindigkeitsreduzierer angeordnet ist.

8. Bewegungsunterstützungsvorrichtung nach einem der vorhergehenden Ansprüche, wobei der Rotor (212) ferner Folgendes umfasst:
eine Kappe (2127), die dazu ausgestaltet ist, die Hauptplatte (2121) abzudecken; und
ein Kappenbefestigungsmittel (2128), das dazu ausgestaltet ist, die Kappe (2127) am Geschwindigkeitsreduzierer (22) zu befestigen, und mit dem Geschwindigkeitsreduzierer (22) verbunden ist.

9. Bewegungsunterstützungsvorrichtung nach einem der vorangehenden Ansprüche, wobei das stützende Teil (28) und der Geschwindigkeitsreduzierer (22) vom Gehäuse (24) trennbar sind.

10. Bewegungsunterstützungsvorrichtung nach einem der vorhergehenden Ansprüche, wobei der Geschwindigkeitsreduzierer (22) Folgendes umfasst:
eine Hauptwelle (S), die mit dem Rotor (212) verbunden ist und sich basierend auf einer Drehachse des Rotors (212) dreht;
ein erstes Sonnenrad (2210), das an der Hauptwelle (S) befestigt ist;
ein Hohlrad (R), das am stützenden Teil (28) befestigt ist und das erste Sonnenrad (2210) umgibt;
eine Mehrzahl von ersten Planetenrädern (2211), die zwischen dem ersten Sonnenrad (2210) und dem Hohlrad (R) angeordnet sind und sich mit dem ersten Sonnenrad (2210) und dem Hohlrad (R) im Eingriff befinden;
einen ersten Träger (2212), der mit einer zentralen Achse jedes von der Mehrzahl von ersten Planetenrädern (2211) verbunden ist;
ein zweites Sonnenrad (2213), das mit dem ersten Träger (2212) verbunden ist;
eine Mehrzahl von zweiten Planetenrädern (2221), die zwischen dem zweiten Sonnenrad (2213) und dem Hohlrad (R) angeordnet sind und sich mit dem zweiten Sonnenrad (2213) und dem Hohlrad (R) im Eingriff befinden;
einen zweiten Träger (2222), der mit einer zentralen Achse jedes von der Mehrzahl von zweiten Planetenrädern (2221) verbunden ist und mit dem Antriebsrahmen (23) verbunden ist.

11. Bewegungsunterstützungsvorrichtung nach Anspruch 10, wobei
der Rotor (212) und das erste Sonnenrad (2210) dazu ausgestaltet sind, sich mit einer gleichen Geschwindigkeit zu drehen, und
das erste Sonnenrad (1110), der erste Träger (2212) und der zweite Träger (2222) dazu ausgestaltet sind, sich mit unterschiedlichen Geschwindigkeiten zu drehen.

12. Bewegungsunterstützungsvorrichtung nach Anspruch 10, wobei die Antriebsanordnung (20) ferner Folgendes umfasst:
ein unteres Lager (251), das zwischen dem Rotor (212) und dem Gehäuse (24) angeordnet ist; und
ein oberes Lager (252), das zwischen dem Hohlrad (R) und dem zweiten Träger (2222) angeordnet ist.

13. Bewegungsunterstützungsvorrichtung nach Anspruch 10, wobei die Antriebsanordnung (20) ferner Folgendes umfasst:
ein erstes inneres Lager (253), das zwischen der Hauptwelle (S) und dem ersten Träger (2212) angeordnet ist;
ein zweites inneres Lager (254), das zwischen der Hauptwelle (S) und dem zweiten Sonnenrad (2213) angeordnet ist; und
ein drittes inneres Lager (255), das zwischen der Hauptwelle und dem zweiten Träger (2222) angeordnet ist.

14. Bewegungsunterstützungsvorrichtung nach Anspruch 13, wobei die Antriebsanordnung (20) ferner eine Scheibe (W) umfasst, die in die Hauptwelle (S) eingesetzt und dazu ausgestaltet ist, das dritte innere Lager (255) abzudecken.

15. Bewegungsunterstützungsanordnung nach einem der vorangehenden Ansprüche, wobei die Antriebsanordnung (20) ferner einen Stopper (26) umfasst, der in dem stützenden Teil (28) angeordnet ist und sich auf einer Bewegungsbahn des Antriebsrahmens (23) befindet.

## Revendications

1. Dispositif d'assistance au mouvement comprenant :
un support proximal (190) configuré pour être porté sur une partie proximale d'un utilisateur ;
un support distal (192) configuré pour être porté sur une partie distale de l'utilisateur ;
un ensemble d'entraînement (20) qui est relié au support proximal (190) et configuré pour générer de l'énergie ; et
un cadre d'entraînement (23) configuré pour transmettre une force à partir de l'ensemble d'entraînement (20) jusqu'au support distal,
dans lequel l'ensemble d'entraînement (20) comprend :
un logement (24) qui est relié au support proximal ;
un actionneur comprenant un stator (211) et un rotor (212), dans lequel le stator (211) est fixé au logement (24) et présente une forme annulaire, dans lequel le rotor (212) est situé à l'intérieur du stator (211) et peut tourner par rapport au stator (211) ;
un réducteur de vitesse (22) qui est inséré à l'intérieur du rotor (212) et comprend une extrémité d'entrée qui est reliée à une extrémité de sortie de l'actionneur ; et
une partie de support (28) qui est reliée au réducteur de vitesse (22) et reliée de manière détachable au logement (24),
dans lequel le réducteur de vitesse (22) est relié à la partie de support (28) tout en étant inséré dans le logement.

2. Dispositif d'assistance au mouvement selon l'une quelconque des revendications précédentes, dans lequel le cadre d'entraînement (23) est configuré pour relier une extrémité de sortie du réducteur de vitesse (12) à la partie distale et est capable de mouvement par rapport à la partie de support.

3. Dispositif d'assistance au mouvement selon l'une quelconque des revendications précédentes, dans lequel la partie de support (28) comprend :
un cadre de base (281) qui chevauche le logement (24) dans la direction d'un axe de rotation du rotor (212) et est relié de manière détachable au logement (24) ; et
un cadre de support (282) qui s'étend à partir du cadre de base (281), est au moins partiellement situé à l'intérieur du stator (211), et supporte le réducteur de vitesse (22).

4. Dispositif d'assistance au mouvement selon l'une quelconque des revendications précédentes, dans lequel la partie de support (28) comprend en outre un cadre d'extension (283) qui s'étend à partir du cadre de base (281) et chevauche le réducteur de vitesse (22) dans la direction d'un axe de rotation du rotor (212).

5. Dispositif d'assistance au mouvement selon l'une quelconque des revendications précédentes, dans lequel la partie de support (28) comprend en outre un élément de fixation de cadre (284) configuré pour fixer la partie de support (28) au logement (24).

6. Dispositif d'assistance au mouvement selon l'une quelconque des revendications précédentes, dans lequel le logement (24) comprend :
un couvercle inférieur (242) configuré pour supporter le rotor (212) de manière à ce que le rotor (212) puisse tourner ;
un couvercle latéral (243) qui s'étend à partir du couvercle inférieur (242) et est configuré pour couvrir une surface latérale du stator (211) ; et
un couvercle supérieur (241) qui s'étend à partir du couvercle latéral (243) et est configuré pour couvrir une surface supérieure du stator (211).

7. Dispositif d'assistance au mouvement selon l'une quelconque des revendications précédentes, dans lequel le rotor (212) comprend :
une plaque principale (2121) qui est prévue parallèlement au couvercle inférieur (242) ; et
une partie d'extension verticale (2122) qui s'étend à partir de la plaque principale et se trouve entre le stator et le réducteur de vitesse.

8. Dispositif d'assistance au mouvement selon l'une quelconque des revendications précédentes, dans lequel le rotor (212) comprend en outre :
un capuchon (2127) configuré pour couvrir la plaque principale (2121) ; et
un élément de fixation de capuchon (2128) configuré pour fixer le capuchon (2127) au réducteur de vitesse (22) et qui est relié au réducteur de vitesse (22).

9. Dispositif d'assistance au mouvement selon l'une quelconque des revendications précédentes, dans lequel la partie de support (28) et le réducteur de vitesse (22) peuvent être séparés du logement (24).

10. Dispositif d'assistance au mouvement selon l'une quelconque des revendications précédentes, dans lequel le réducteur de vitesse (22) comprend :
un arbre principal (S) qui est relié au rotor (212) et tourne sur la base d'un axe de rotation du rotor (212) ;
un premier planétaire (2210) qui est fixé sur l'arbre principal (S) ;
une couronne (R) qui est fixe sur la partie de support (28) et entoure le premier planétaire (2210) ;
une pluralité de premiers engrenages planétaires (2211) qui sont agencés entre le premier planétaire (2210) et la couronne (R) et s'engrènent avec le premier planétaire (2210) et la couronne (R) ;
un premier moyen porteur (2212) qui est relié à un axe central de chacun de la pluralité de premiers engrenages planétaires (2211) ;
un second planétaire (2213) qui est relié au premier moyen porteur (2212) ;
une pluralité de seconds engrenages planétaires (2221) qui sont agencés entre le second planétaire (2213) et la couronne (R) et s'engrènent avec le second planétaire (2213) et la couronne (R) ; et
un second moyen porteur (2222) qui est relié à un axe central de chacun de la pluralité de seconds engrenages planétaires (2221) et relié au cadre d'entraînement (23).

11. Dispositif d'assistance au mouvement selon la revendication 10, dans lequel
le rotor (212) et le premier planétaire (2210) sont configurés pour tourner à la même vitesse, et
le premier planétaire (1110), le premier moyen porteur (2212) et le second moyen porteur (2222) sont configurés pour tourner à des vitesses différentes.

12. Dispositif d'assistance au mouvement selon la revendication 10, dans lequel l'ensemble d'entraînement (20) comprend en outre :
un palier inférieur (251) qui est agencé entre le rotor (212) et le logement (24) ; et
un palier supérieur (252) qui est agencé entre la couronne (R) et le second moyen porteur (2222).

13. Dispositif d'assistance au mouvement selon la revendication 10, dans lequel l'ensemble d'entraînement (20) comprend en outre :
un premier palier intérieur (253) qui est agencé entre l'arbre principal (S) et le premier moyen porteur (2212) ;
un deuxième palier intérieur (254) qui est agencé entre l'arbre principal (S) et le second planétaire (2213) ; et
un troisième palier intérieur (255) qui est agencé entre l'arbre principal et le second moyen porteur (2222).

14. Dispositif d'assistance au mouvement selon la revendication 13, dans lequel l'ensemble d'entraînement (20) comprend en outre une rondelle (VV) qui est insérée dans l'arbre principal (S) et est configurée pour couvrir le troisième palier intérieur (255).

15. Dispositif d'assistance au mouvement selon l'une quelconque des revendications précédentes, dans lequel l'ensemble d'entraînement (20) comprend en outre une butée (26) qui est agencée dans la partie de support (28) et est située sur un chemin de déplacement du cadre d'entraînement (23).
